# EUROPEAN PATENT APPLICATION

(11) **EP 4 668 875 A1**
(43) Date of publication of application: **24.12.2025**
(21) Application number: 23921763.1
(22) Date of filing: 15.02.2023
(51) Int. Cl.: H04W 52/02

(54) **PROCESSING METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN); XU, Weijie, Dongguan, Guangdong 523860 (CN)
(74) Representative: Taor, Simon Edward William
(86) International application number: PCT/CN2023/076222
(87) International publication number: WO 2024/168600

(57) **Abstract**

Embodiments of the present application provide a processing method and apparatus, a terminal device, and a network device. The method comprises: a terminal device receives a first signal, the first signal being used for determining whether to exit an energy-saving receiving and/or transmitting state.

## Description

### TECHNICAL FIELD

Embodiments of the present disclosure relate to the technical field of mobile communications, and more particularly to, processing methods and processing devices, a terminal device, and a network device.

### BACKGROUND

With the development of the communication technology, the terminal device has more and more functions. Correspondingly, it is more and more important to realize flexible power consumption control for the terminal device.

### SUMMARY

Embodiments of the present disclosure provide processing methods and processing devices, a terminal device, and a network device.

The embodiment of the present disclosure provides a processing method including following operation.

A terminal device receives a first signal, where the first signal is used for determining whether to exit an energy-saving reception and/or transmission state.

The embodiment of the present disclosure provides a method including following operation.

A network device sends a first signal on each transmission resource of at least some of transmission resources in a transmission resource set, where the first signal is used for a terminal device to determine whether to exit an energy-saving reception and/or transmission state.

The embodiment of the present disclosure provides a processing device. The processing device is applied to a terminal device and includes a receiving unit.

The receiving unit is configured to receive a first signal, where the first signal is used for determining whether to exit an energy-saving reception and/or transmission state.

The embodiment of the present disclosure also provides a device. The device is applied to a network device and includes a sending unit.

The sending unit is configured to send a first signal on each transmission resource of at least some of transmission resources in a transmission resource set, where the first signal is used for a terminal device to determine whether to exit an energy-saving reception and/or transmission state.

The communication device provided by the embodiment of the present disclosure may be the terminal device or the network device in the aforementioned solutions, and the communication device includes a processor and a memory. The memory is configured to store a computer program, and the processor is configured to call and run the computer program stored in the memory to perform the aforementioned processing methods.

The chip provided by the embodiment of the present disclosure is configured to implement the aforementioned processing methods.

Specifically, the chip includes a processor configured to call and run a computer program from a memory, to enable a device on which the chip is mounted to perform the aforementioned processing methods.

The computer-readable storage medium provided by the embodiment of the present disclosure is configured to store a computer program that causes a computer to perform the aforementioned processing methods.

The computer program product provided by the embodiment of the present disclosure includes computer program instructions that cause a computer to perform the aforementioned processing methods.

The computer program provided by the embodiment of the present disclosure causes, when the computer program is executed on a computer, the computer to perform the aforementioned processing methods.

According to the method provided by the embodiment of the present disclosure, the terminal device may determine whether to exit the energy-saving reception and/or transmission state according to the received first signal, thereby flexibly realizing power consumption control for the terminal device.

### BRIEF DESCRIPTION OF THE DRAWINGS

The accompanying drawings, which are illustrated herein, provide further understanding of the present disclosure and constitute a part of the present disclosure. The exemplary embodiments of the present disclosure and description thereof are intended to be illustrative of the present disclosure and do not constitute an undue limitation of the present disclosure. In the accompanying drawings:
FIG. 1 is a schematic diagram of a communication architecture according to an embodiment of the present disclosure.
FIG. 2 is a schematic diagram of a principle of Discontinuous Reception (DRX) according to an embodiment of the present disclosure.
FIG. 3 is a schematic diagram of a principle of a carrier/Band Width Part (BWP) dormancy mechanism according to an embodiment of the present disclosure.
FIG. 4 is a schematic structural diagram of a receiver system of a terminal device according to an embodiment of the present disclosure.
FIG. 5 is a first flowchart of a processing method according to an embodiment of the present disclosure.
FIG. 6 is a schematic diagram of a principle of Frequency Shift Keying (FSK) modulation according to an embodiment of the present disclosure.
FIG. 7 is a schematic diagram of an exemplary transmission scenario of a first signal according to an embodiment of the present disclosure.
FIG. 8 is a first schematic diagram of distribution of resources for transmitting a first signal according to an embodiment of the present disclosure.
FIG. 9 is a second schematic diagram of distribution of resources for transmitting a first signal according to an embodiment of the present disclosure.
FIG. 10 is a third schematic diagram of distribution of resources for transmitting a first signal according to an embodiment of the present disclosure.
FIG. 11 is a second flowchart of a processing method according to an embodiment of the present disclosure.
FIG. 12 is a schematic structural diagram of a processing device 1200 according to an embodiment of the present disclosure.
FIG. 13 is a schematic structural diagram of a processing device 1300 according to an embodiment of the present disclosure.
FIG. 14 is a schematic structural diagram of a communication device according to an embodiment of the present disclosure.
FIG. 15 is a schematic structural diagram of a chip according to an embodiment of the present disclosure.
FIG. 16 is a schematic block diagram of a communication system according to an embodiment of the present disclosure.

### DETAILED DESCRIPTION

The technical solutions in the embodiments of the present disclosure will be described below in combination with the accompanying drawings in the embodiments of the present disclosure. It is apparent that the described embodiments are partial embodiments of the present disclosure but not all of the embodiments. Based on the embodiments in the present disclosure, all other embodiments obtained by those of ordinary skill in the art without creative work shall fall within the scope of protection of the present disclosure.

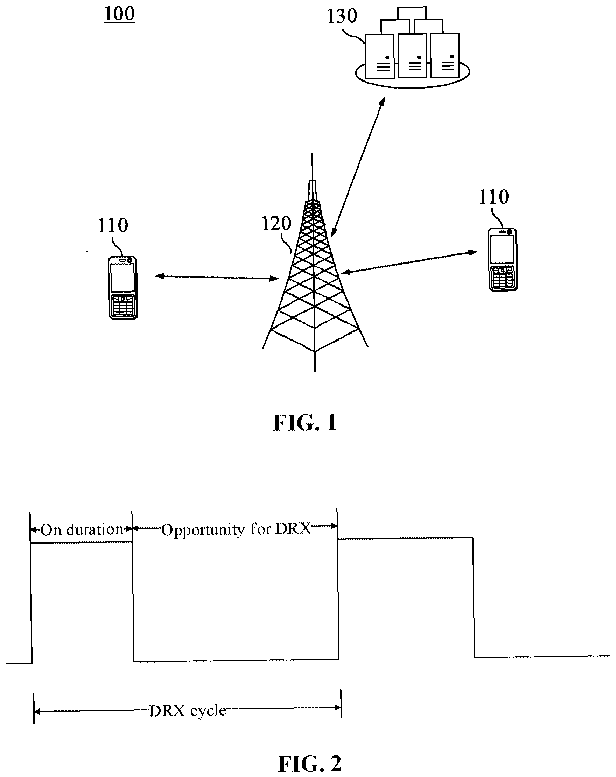

FIG. 1 is a schematic diagram of an exemplary communication architecture according to an embodiment of the present disclosure.

As illustrated in FIG. 1, a communication system 100 may include a terminal device 110 and a network device 120. The network device 120 may communicate with the terminal device 110 through an air interface. Multi-service transmission between the terminal device 110 and the network device 120 is supported.

It should be understood that the embodiments of the present disclosure are illustrated with reference to the communication system 100 only, but are not limited thereto. In other words, the technical solutions of the embodiments of the present disclosure may be applied to various communication systems, such as a Long Term Evolution (LTE) system, an LTE Time Division Duplex (TDD), a Universal Mobile Telecommunication System (UMTS), an Internet of Things (IoT) system, a Narrow Band Internet of Things (NB-IoT) system, an Enhanced Machine-Type Communications (eMTC) system, a 5-th Generation (5G) communication system (also referred to as a New Radio (NR) communication system), or a future communication system, etc.

In the communication system 100 illustrated in FIG. 1, the network device 120 may be an access network device that communicates with the terminal device 110. The access network device may provide communication coverage for a specific geographic region and may communicate with a terminal device 110 (e.g., a User Equipment (UE)) in the coverage.

The network device 120 may be an Evolutional Node B (eNB or eNodeB) in an LTE system, a Next Generation Radio Access Network (NG RAN) device, a base station (gNB) in an NR system, or a wireless controller in a Cloud Radio Access Network (CRAN). The network device may further be a relay station, an access point, a vehicle-mounted device, a wearable device, a hub, a switch, a network bridge, a router, a network device in a future evolved Public Land Mobile Network (PLMN) or the like.

The terminal device 110 may be any terminal device, which includes, but not limited to, a terminal device that has a wired or wireless connection to the network device 120 or other terminal devices.

As an example, the terminal device 110 may be an access terminal, a UE, a user unit, a user station, a mobile station, a mobile platform, a remote station, a remote terminal, a mobile device, a user terminal, a terminal, a wireless communications device, a user agent, or user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a 5G network, a terminal device in a future evolved network or the like.

The terminal device 110 may be applied to Device to Device (D2D) communication.

The wireless communication system 100 may further include a core network device 130 that communicates with the network deice 120. The core network device 130 may be a 5G core (5GC) device, such as an Access and Mobility Management Function (AMF), an Authentication Server Function (AUSF), a User Plane Function (UPF), or a Session Management Function (SMF). In an embodiment, the core network device 130 may also be an Evolved Packet Core (EPC) device in the LTE network, for example, a Session Management Function + Core Packet Gateway (SMF+PGW-C) device. It should be understood that the SMF+PGW-C may achieve functions that can be achieved by both the SMF and PGW-C. During the process of network evolution, the aforementioned core network device may also be called by other names, or new network entities may be formed by dividing the functions of the core network, which is not limited by the embodiments of the present disclosure.

A connection may be established between various functional units in the communication system 100 through a Next Generation (NG) interface, to realize communication.

For example, the terminal device may establish an air interface connection with the access network device through an NR interface for transmitting user plane data and control plane signaling. The terminal device may establish a control plane signaling connection with the AMF through an NG interface 1 (abbreviated as N1). The access network device, such as a next generation wireless access base station (gNB), may establish a user plane data connection with the UPF through an NG interface 3 (abbreviated as N3). The access network device may establish a control plane signaling connection with the AMF through an NG interface 2 (abbreviated as N2). The UPF may establish a control plane signaling connection with the SMF through an NG interface 4 (abbreviated as N4). The UPF may interact the user plane data with a data network through an NG interface 6 (abbreviated as N6). The AMF may establish a control plane signaling connection with the SMF through an NG interface 11 (abbreviated as N11). The SMF may establish a control plane signaling connection with a Policy Control Function (PCF) through an NG interface 7 (abbreviated as N7).

One network device, one core network device and two terminal devices are exemplarily shown in FIG. 1. In an embodiment, the wireless communication system 100 may include multiple network devices, and another number of terminal devices may be included in the coverage of each network device, which is not limited in the embodiments of the present disclosure.

It should be noted that FIG. 1 only illustrates the system to which the present disclosure is applicable by way of example. Of course, the methods illustrated in the embodiments of the present disclosure may also be applicable to other systems. Moreover, the terms "system" and "network" the present disclosure are usually interchangeably used herein. The term "and/or" herein only is used to indicate an association relationship for describing the associated objects, and represents that three kinds of relationships may exist. For example, "A and/or B" may represent three conditions, i.e., independent existence of A, existence of both A and B, and independent existence of B. In addition, the character "/" herein usually represents that the previous and next associated objects form an "or" relationship. It should also be understood that the term "indicate" referred to in the embodiments of the present disclosure may be a direct indication or an indirect indication, and may also be indicative of an associated relationship. For example, "A indicates B", which may mean that A directly indicates B, e.g., B may be obtained through A. It may further mean that A indirectly indicates B, e.g., A indicates C, and B may be obtained through C. It may further mean that there is an association between A and B. It should also be understood that the term "corresponding" referred to in the embodiments of the present disclosure may represent that there is a direct correspondence or an indirect correspondence between the two objects, or may further represent that there is an association relationship between the two objects, a relationship between the indication and the object to be indicated, or a relationship between the configuration and the object to be configured, etc. It should also be understood that the phrase "predefined" or "predefined rules" referred to in the embodiments of the present disclosure may be implemented by pre-storing corresponding codes, tables, or by other means that may be used to indicate relevant information in devices (such as terminal devices and network devices). The specific implementations of which are not limited in the present disclosure. For example, the "predefined" may refer to what is defined in a protocol. It should also be understood that the "protocol" in the embodiments of the present disclosure may be a standard protocol in the communication field, such as an LTE protocol, an NR protocol, and related protocols applied in future communication systems, which is not limited in the present disclosure.

In order to facilitate understanding of the technical solutions of the embodiments of the present disclosure, related technologies of the embodiments of the present disclosure are described below. The following related technologies used as optional solutions may be combined with technical solution of the embodiments of the present disclosure in various ways, and the combinations belong to the scope of protection of the embodiments of the present disclosure.

In order to reduce the power consumption of the terminal device, a Discontinuous Reception (DRX) transmission mechanism is introduced in the current wireless communication system. A basic principle of a DRX operating mode is shown in FIG. 2. Herein, the network side may configure a DRX cycle for the terminal device, and the DRX cycle is composed of an On duration and an opportunity for DRX. The On duration indicates a period of time during which the terminal device monitors a Physical Downlink Control Channel (PDCCH). During the period of time, the radio frequency channel is turned on, and the terminal device continuously monitors and receives the PDCCH. The opportunity for DRX indicates that the terminal device is in a sleep state. During this period, the radio frequency channel is turned off, and the terminal device may no longer monitor the PDCCH to save power.

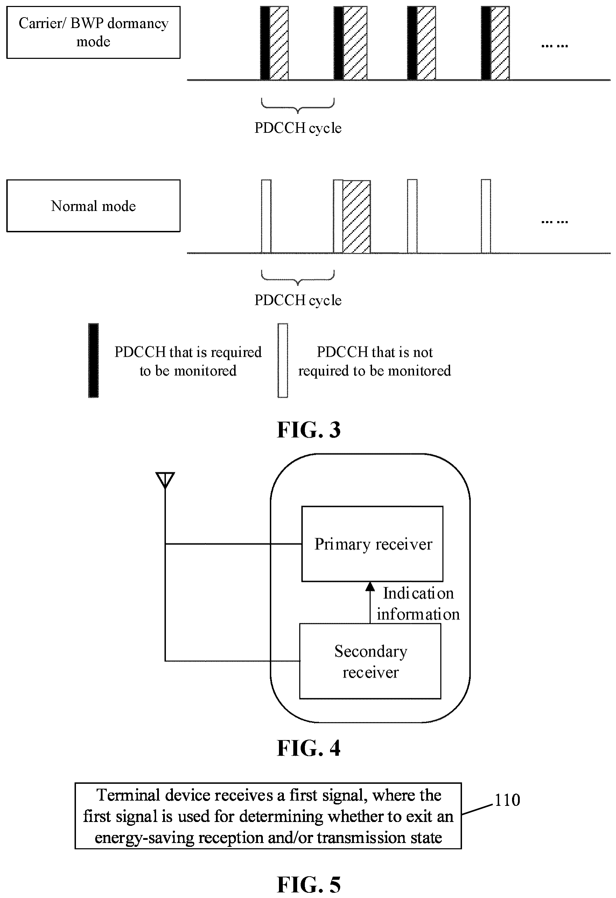

In addition, in the current Carrier Aggregation (CA)/Dual Connectivity (DC) scenario, a carrier/Band width Part (BWP) dormancy mode is introduced. With reference to FIG. 3, compared with the normal mode, in the carrier/BWP dormancy mode, the terminal device may ignore the PDCCH monitoring on one carrier or greatly reduce the PDCCH monitoring on one carrier. Moreover, the terminal device only needs to maintain some basic signal reception for channel measurement, such as, uplink and downlink synchronization, and frequency calibration. In this way, the power consumption of the terminal device is greatly reduced.

It is to be noted that the network device may adjust the dormancy state carrier by carrier according to the current system throughput. The mechanism that the NR adjusts the dormancy state of the secondary carrier is to switch to the dormancy BWP or the non-dormancy BWP to correspondingly enable a certain carrier to enter the dormancy or non-dormancy state.

In order to further reduce the power consumption of the terminal device, the Standard Discussion Version 18 (R18) considers introducing a secondary receiver for the terminal device. The secondary receiver has characteristics of extremely low cost, low complexity and low power consumption. The secondary receiver mainly receives signals through envelope detection, amplitude detection or phase detection. The power consumption level of the secondary receiver is several orders of magnitude lower than the power consumption level of the aforementioned traditional DRX or carrier dormancy mechanism. Generally, the power consumption of the traditional receiver is greater than 100 milliwatts, while the power consumption of the low-power-consumption receiver may less than 1 milliwatt.

With reference to the schematic structural diagram of the receiver system of the terminal device shown in FIG. 4, the primary receiver and the secondary receiver in the terminal device may share a set of radio frequency antennas. Under certain conditions, the terminal device may turn off the primary receiver, and receive the signals with low demodulation complexity through the secondary receiver, to implement communication with the network. If the network device requires the terminal device to turn on the primary receiver, indication information may be transmitted by the network device to the secondary receiver through the aforementioned signal, to indicate the terminal device to turn on the primary receiver. Specifically, after receiving the indication information of turning on the primary receiver, the secondary receiver may transmit wake up information to the primary receiver, which indicates to turn on the primary receiver.

The signal(s) received by the secondary receiver may differ from the signal(s) carried based on the Physical Downlink Control Channel (PDCCH) defined in R16 and R17 in terms of the modulation scheme(s), waveform(s), etc. The secondary receiver is capable of receiving signals with relatively low demodulation complexity. Exemplarily, the secondary receiver may receive: an envelope signal that is obtained by performing Amplitude Shift Keying (ASK) modulation on a carrier signal, a signal that is obtained by performing Phase Shift Keying (PSK) modulation on the carrier signal, a signal that is obtained by performing Frequency Shift Keying (FSK) modulation on the carrier signal, and the like.

Exemplarily, the secondary receiver may be a Wake Up Receiver (WUR). Herein, the WUR may receive a wake-up signal (WUS). The WUS may be used to wake up the primary receiver in the terminal device. If the WUS indicates the terminal device to turn on the primary receiver, the secondary receiver may transmit wake up information to the primary receiver, which indicates to turn on the primary receiver. Otherwise, the primary receiver may be in the off state.

The secondary receiver may be not necessary to be turned on and turned off for saving power as the primary receiver, but may be activated by the WUS at any time to receive information. In some embodiments, the secondary receiver may receive a signal through On-Off Keying (OOK) modulation. With reference to a schematic diagram of a principle of OOK modulation shown in FIG. 2, the OOK is referred to as binary Amplitude Shift Keying (2ASK). The OOK modulation may modulate the amplitude of the carrier to be a non-zero value and a zero value, which respectively correspond to On and Off. When the amplitude of the carrier is modulated to be the non-zero value (corresponding to the On component in the OOK), it represents a bit with a value of 1 among information bits. When the amplitude value of the carrier is modulated to be the zero value (corresponding to the Off component in the OOK), it represents a bit with a value of 0 among the information bits. Further, after modulation, the information bits may be converted into an analog signal; then, the analog signal may be filtered by a filter and further sent out through a radio frequency module.

It is to be noted that, the demodulation for the signal through the ASK modulation, PSK modulation and FSK modulation may be completed by driving a low-power-consumption circuit based on an energy provided by a wireless radio frequency signal. Therefore, the secondary receiver may be a passive receiver. Furthermore, the secondary receiver may also be powered by the terminal device. Regardless of the power supply manner, the power consumption of the secondary receiver is significantly reduced compared with the power consumption of a traditional receiver in the terminal device.

In practical applications, the primary receiver of the terminal device may be waked up through the signal received by the secondary receiver, which may further save power. In a possible implementation, the network device may transmit the WUS in full power at one time, and all terminal devices within the coverage of the network device may be waked up simultaneously. However, a large number of terminal devices may use or receive wireless communication resources simultaneously, resulting in congestion. In another possible implementation, the network device may distinguish different terminal devices and wake up different terminal devices separately. However, a volume for distinguished wake-up signals is very limited. Therefore, how to flexibly wake up the terminal device and enable the terminal device to exit the energy-saving reception and/or transmission state is a technical problem to be solved urgently.

For convenience of understanding the technical solutions of the embodiments of the present disclosure, the technical solutions in the present disclosure are described below through the detailed embodiments. The aforementioned related technologies, used as optional solutions, may be combined with the technical solutions of the embodiments of the present disclosure in various ways, and the combinations shall fall within the scope of the protection of the embodiments of the present disclosure. The embodiments of the present disclosure include at least part of the following contents.

An embodiment of the present disclosure provides a processing method. With reference to FIG. 5, the processing method provided by the embodiment of the present disclosure may include the following operation 110.

In operation 110, a terminal device receives a first signal, where the first signal is used for determining whether to exit an energy-saving reception and/or transmission state.

In an embodiment, the terminal device may receive the first signal through a secondary receiver (e.g., the wake-up receiver in the aforementioned embodiment).

In an embodiment, the first signal is a signal received based on at least one of: envelope detection, amplitude detection, frequency detection, or phase detection. That is to say, the first signal may be modulated by a modulation manner, such as ASK, OOK, FSK, or PSK, and correspondingly, the waveform of the first signal may be the waveform formed by the ASK modulation, OOK modulation, FSK modulation, PSK modulation, etc.

It is to be noted that since the detection complexity of the envelope detection, the amplitude detection, the frequency detection, and the phase detection is very low, power consumption is extremely low.

In the embodiment of the present disclosure, the first signal may be a signal sent by modulating a binary sequence. The binary sequence may be information carried by the first signal, or may be a Pseudo-noise (PN) sequence, a Gold sequence, an M sequence, a Hadamard sequence or other sequences, which is not limited in the embodiments of the present disclosure. In addition, a carrier of the first signal is a single carrier.

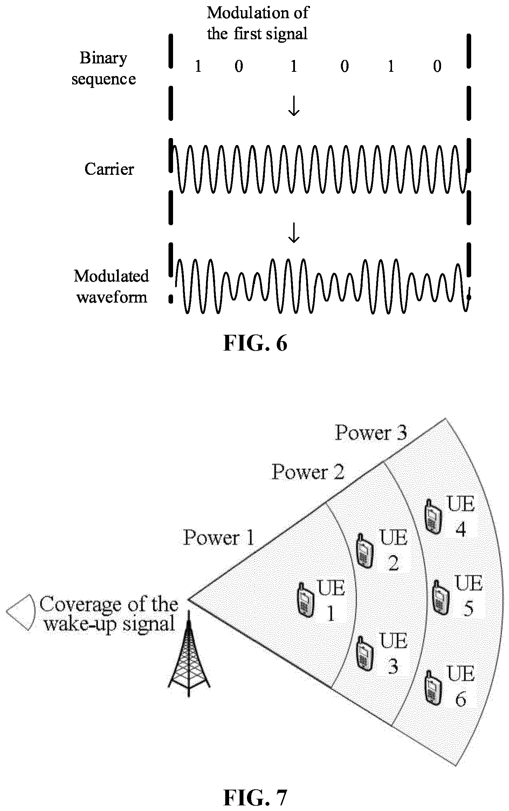

Exemplarily, with reference to FIG. 6, the binary sequence may be 101010, and the carrier may be a single carrier. In the FSK-modulated waveform, the amplitude of the carrier corresponding to the bit data having a value of "1" in the binary sequence is 1, and the amplitude of the carrier corresponding to the bit data having a value of "0" in the binary sequence is approximately 0. In this way, the terminal device may perform the envelope detection on the received first signal and determine that the information bit carried in the first signal is 101010.

In an embodiment, the terminal device may receive the first signal sent by the network device. The network device may send the first signal on at least some of transmission resources in a transmission resource set. The information carried in the first signal sent on all transmission resources may be the same or different, which is not limited in the embodiment of the present disclosure.

In an embodiment, the terminal device may detect the first signal on each transmission resource of at least some of transmission resources in a transmission resource set. That is to say, the terminal device expects that the network device transmits the first signal on each transmission resource of at least some of transmission resources in a transmission resource set.

In an embodiment, the transmission resource set may be configured by the network. Exemplarily, the network device may configure a specific position of each transmission resource in the transmission resource set for the terminal device by dedicated signaling or multiplexing other signaling before the terminal device enters the energy-saving reception and/or transmission state. In addition, the transmission resource set may be predefined in the protocol or determined by the terminal device according to a preset rule, which is not limited in the embodiment of the present disclosure.

In an embodiment, the terminal device may detect the first signal on a certain transmission resource or certain transmission resources in the transmission resource set; receive the first signal; and determine whether to exit the energy-saving state based on the first signal. In an embodiment, when the terminal device detects a first signal having a sufficiently strong power on a certain transmission resource or certain transmission resources, the terminal device may determine whether to exit the energy-saving reception and/or transmission state according to the first signal.

In an embodiment, the first signal may be the wake-up signal (WUS) for indicating the terminal device to exit the energy-saving reception and/or transmission state, so as to wake up the primary receiver of the terminal device. The first signal may be other types of signals, which is not limited in the embodiment of the present disclosure.

It is to be noted that the energy-saving reception and/or transmission state may be a low-power-consumption reception and/or transmission state of the terminal device. In this state, the terminal device may turn off the primary receiver and turn on only the secondary receiver for data transceiving, so as to reduce the power consumption of the terminal device. In the embodiment of the present disclosure, the terminal device determines whether to exit the energy-saving reception and/or transmission state according to the first signal. That is to say, the terminal device determines whether to maintain the current energy-saving reception and/or transmission state or switch to the normal reception and/or transmission state according to the first signal. In addition, the terminal device determines whether to exit the energy-saving reception and/or transmission state according to the first signal, which may also be understood as that the terminal device determines whether to turn on the primary receiver for data transceiving according to the first signal.

In an embodiment, the terminal device may directly exit the energy-saving reception and/or transmission state according to the first signal, or the terminal device may further detect the information carried in the first signal, and determine whether to exit the energy-saving reception and/or transmission state according to the carried information, which is not limited in the embodiment of the present disclosure.

In some embodiments, the terminal device may detect the first signal on each resource of at least some of transmission resources in the transmission resource set; and the terminal device expects that transmit powers of the first signal transmitted on different transmission resources are different.

That is to say, the network device may transmit the first signal on each transmission resource of at least some of transmission resources in the transmission resource set, and the transmit power of the first signal transmitted on each transmission resource may be different.

It is to be understood that the coverages of the first signal corresponding to different transmit powers are different. The greater the transmit power of the first signal, the larger the coverage of the corresponding first signal; and the smaller the transmit power of the first signal, the smaller the coverage of the corresponding first signal.

It is to be understood that whether the terminal device is able to detect the first signal on a certain transmission resource may be related to the location of the terminal device. If the terminal device is within the coverage of the first signal transmitted on the certain transmission resource, the terminal device may detect the first signal; otherwise, the terminal device cannot detect and receive the first signal on the transmission resource.

That is to say, different terminal devices within the coverage of the network device may detect and obtain the first signal on different transmission resources.

Exemplarily, with reference to FIG. 7, the network device may transmit the first signal on three transmission resources, and the transmit power of the first signal transmitted on the first transmission resource is power 1, the transmit power of the first signal transmitted on the second transmission resource is power 2, and the transmit power of the first signal transmitted on the third transmission resource is power 3, where power 1 < power 2 < power 3. As can be seen, when the network device transmits the first signal on the first transmission resource, the UE1 may detect the first signal, and thus, the network device may wake up the UE1 on the first transmission resource and the UE1 exits the energy-saving reception and/or transmission state. When the network device transmits the first signal on the second transmission resource, the UE2 and UE3 may detect the first signal, and thus, the network device may wake up the UE2 and UE3 on the second transmission resource and the UE2 and UE3 exit the energy-saving reception and/or transmission state. Similarly, when the network device transmits the first signal on the third transmission resource, the UE4, UE5 and UE6 may detect the first signal, and thus, the network device may wake up the UE4, UE5 and UE6 on the third transmission resource, and the UE4, UE5 and UE6 exit the energy-saving reception and/or transmission state.

As can be seen, the network device may indicate the terminal devices to exit the energy-saving reception and/or transmission state in batches by using the geographical location difference between different terminal devices, which avoids the problem of communication congestion caused by simultaneously waking up a large number of terminal devices, and can maximize the utilization of limited radio resources.

In an embodiment, transmit powers of the first signal transmitted on different transmission resources being different may include that: transmit powers of the first signal transmitted on different transmission resources have different values, or transmit powers of the first signal transmitted on different transmission resources have different power levels, which is not limited in the present disclosure.

In an embodiment, the values or power levels of the transmit powers of the first signal transmitted on at least some of transmission resources in the transmission resource set may be a set of discrete values. Exemplarily, a value of the transmit power per unit frequency of the first signal transmitted on each transmission resource may be Pₘₐₓ-x, where Pₘₐₓ is the maximum transmit power of the first signal per unit frequency, the value of x corresponding to each transmission resource is different, and the values of x may be {-12 dB, -9 dB, -6 dB, -3 dB, 0 dB}, etc.

In some embodiments, the transmission resources may include time-domain resources and/or frequency-domain resources. That is to say, the terminal device may detect the first signal on multiple time-domain units, and/or multiple frequency-domain units.

In an embodiment, the time-domain unit may be a slot, a micro slot, a time-domain symbol, a time-domain symbol set, etc., which is limited in the embodiment of the present disclosure.

In an embodiment, the frequency-domain unit may include a subcarrier, a subcarrier set, etc., which is not limited in the embodiment of the present disclosure.

In some embodiments, the terminal device expecting that transmit powers of the first signal transmitted on different transmission resources are different may be understood as that: the terminal device expects that the transmit powers of the first signal transmitted on different time-domain units are different, and/or that the transmit powers of the first signal transmitted on the different frequency-domain units are different.

In a possible implementation, the network device may send the first signal at different transmit powers on different time-domain units. That is to say, the terminal device expects that the transmit powers of the first signal transmitted on different time-domain units are different.

It is to be noted that the transmit powers of the first signal transmitted on different time-domain units may not be correlated with a temporal order of the time-domain units. In addition, the transmit powers of the first signal transmitted on different time-domain units may be correlated with a temporal order of the time-domain units, which is not limited in the embodiment of the present disclosure.

In an embodiment, in the case where the transmit powers of the first signal transmitted on different time-domain units may be correlated with the temporal order of the time-domain units, the temporal order of the multiple time-domain units is positively correlated or negatively correlated with an order of the transmit powers of the first signal transmitted on the multiple time-domain units.

Herein, the temporal order of the multiple time-domain units is positively correlated with the order of the transmit powers of the first signal transmitted on the multiple time-domain units, which means that the transmit powers of the first signal transmitted on different time-domain units may be in an ascending order according to the temporal order of the time-domain units. Specifically, a transmit power of the first signal transmitted on a time-domain unit with the earlier temporal order is smaller than a transmit power of the first signal transmitted on a time-domain unit with the later temporal order.

In addition, the temporal order of the multiple time-domain units is negatively correlated with the order of the transmit powers of the first signal transmitted on the multiple time-domain units, which means that the transmit powers of the first signal transmitted on different time-domain units may be in a descending order according to temporal order of the time-domain units. Specifically, the transmit power of the first signal transmitted on the time-domain unit with the earlier temporal order is greater than the transmit power of the first signal transmitted on the time-domain unit with the later temporal order.

It is to be noted that the positive correlation and the negative correlation may be the linear correlation, i.e., the differences between transmit powers of the first signal transmitted on different time-domain units are the same. The positive correlation and the negative correlation may be the non-linear correlation, i.e., the differences between transmit powers of the first signal transmitted on different time-domain units are different.

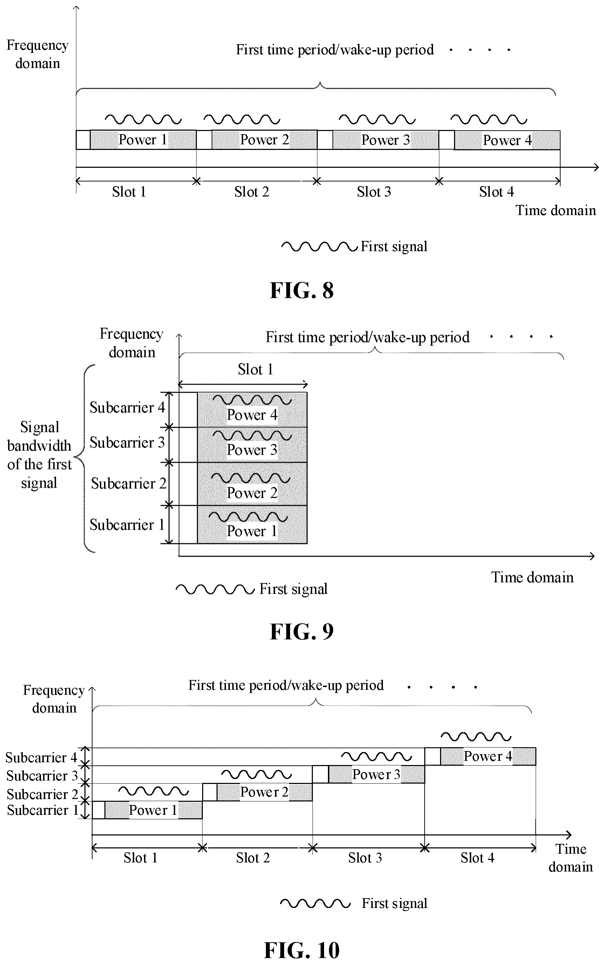

Exemplarily, with reference to FIG. 8, the network device may send the first signal in slot 1 to slot 4 on the time domain. The transmit power of the first signal in slot 1 is power 1, the transmit power of the first signal in slot 2 is power 2, the transmit power of the first signal in slot 3 is power 3, and the transmit power of the first signal in slot 4 is power 4, where power 1 < power 2 < power 3< power 4. Accordingly, the terminal device may detect the first signal in each of the slot 1 to slot 4 according to the temporal order of the slots.

In another possible implementation, the network device may send the first signal at different transmit powers on different frequency-domain units. That is to say, the terminal device expects that the transmit powers of the first signal transmitted on different frequency-domain units are different.

It is to be noted that the transmit powers of the first signal transmitted on different frequency-domain units may not be correlated with an order of frequencies of the frequency-domain units. In addition, the transmit powers of the first signal transmitted on different frequency-domain units may be correlated with the order of frequencies of the frequency-domain units, which is not limited in the embodiment of the present disclosure.

In an embodiment, the order of frequencies of multiple frequency-domain units is positively correlated or negatively correlated with the order of the transmit powers of the first signal transmitted on the multiple frequency-domain units.

The order of frequencies of the multiple frequency-domain units is positively correlated with the order of the transmit powers of the first signal transmitted on the multiple frequency-domain units, which means that the transmit powers of the first signal transmitted on different frequency-domain units may be in an ascending order according to the order of frequencies of the frequency-domain units. Specifically, a transmit power of the first signal transmitted on a frequency-domain unit with a high frequency is greater than a transmit power of the first signal transmitted on a frequency-domain unit with a low frequency.

In addition, the order of the frequencies of the multiple frequency-domain units is negatively correlated with the order of the transmit powers of the first signal transmitted on the multiple frequency-domain units, which means that the transmit powers of the first signal transmitted on different frequency-domain units may be in an descending order according to the order of frequencies of the frequency-domain units. Specifically, the transmit power of the first signal transmitted on the frequency-domain unit with the high frequency is smaller than the transmit power of the first signal transmitted on the frequency-domain unit with the low frequency.

It is to be noted that the positive correlation and the negative correlation may be the linear correlation, i.e., the differences between transmit powers of the first signal transmitted on different frequency-domain units are the same. The positive correlation and the negative correlation may be the non-linear correlation, i.e., the differences between transmit powers of the first signal transmitted on different frequency-domain units are different.

Exemplarily, with reference to FIG. 9, the network device may send the first signal on subcarrier 1 to subcarrier 4 on the frequency-domain bandwidth. The transmit power of the first signal on subcarrier 1 is power 1, the transmit power of the first signal on subcarrier 2 is power 2, the transmit power of the first signal on subcarrier 3 is power 3, and the transmit power of the first signal on subcarrier 4 is power 4, where power 1 < power 2 < power 3< power 4. Accordingly, the terminal device may detect the first signal on each of the subcarrier 1 to subcarrier 4 according to the order of frequencies.

In yet another possible implementation, the network device may send the first signal at different transmit powers on different time-domain units and different frequency-domain units. That is to say, the terminal device expects that the transmit powers of the first signal transmitted on different time-domain units and frequency-domain units are different.

It is to be noted that, in the implementation, transmit powers of the first signal transmitted on the time-domain units and the frequency-domain units may not be correlated with the temporal order of the time-domain units and the order of frequencies of the frequency-domain units. In addition, transmit powers of the first signal transmitted on different frequency-domain units may be correlated with the temporal order of the time-domain units and/or the order of frequencies of the frequency-domain units, which is not limited in the embodiment of the present disclosure.

Exemplarily, with reference to FIG. 10, the network device may send the first signal with power 1 on slot 1 and subcarrier 1, send the first signal with power 2 on slot 2 and subcarrier 2, send the first signal with power 3 on slot 3 and subcarrier 3, and send the first signal with power 4 on slot 4 and subcarrier 4, where power 1 < power 2 < power 3 < power 4. Accordingly, the terminal device may detect the first signal in each of the slot 1 to slot 4 according to the temporal order of the slots and the order of frequencies of the subcarriers.

Hereinafter, the manner in which the terminal device determines whether to exit the energy-saving reception and/or transmission state according to the first signal is described in detail.

In some embodiments, the transmission resource set includes multiple transmission resources within each of one or more first time periods.

In an embodiment, the first time period may be a period where the terminal device detects the first signal.

In an embodiment, the first time period may be configured by the network. Exemplarily, the network device may configure the first time period for the terminal device by dedicated signaling or multiplexing other signaling before the terminal device enters the energy-saving reception and/or transmission state. In addition, the first time period may be predefined in the protocol or determined by the terminal device according to a preset rule, which is not limited in the embodiment of the present disclosure.

It is to be noted that, in the case where the network device configures the first time period for the terminal device, the network device may configure the first time period and the specific position of each transmission resource in the transmission resource set for the terminal device through the same signaling; or may configure the first time period and the specific position of each transmission resource in the transmission resource set for the terminal device through different signaling, which is not limited in the embodiment of the present disclosure.

In a possible implementation, the terminal device may continuously detect the first signal according to the first time period. That is to say, the terminal device may continuously detect the first signal on multiple transmission resources within each first time period.

For example, with reference to FIG. 8 to FIG. 10, when the terminal device is in the energy-saving reception and/or transmission state, the terminal device may detect the first signal on multiple time-domain units and/or frequency-domain units within each first time period according to the first time period, so as to facilitate determination of whether to exit the energy-saving reception and/or transmission state.

In another possible implementation, the terminal device may detect the first signal on fixed multiple transmission resources. The terminal device may detect the first signal only on the fixed transmission resources.

In some embodiments, the first signal may be a power-supply signal with no information being transmitted. Exemplarily, the first signal may be a sinusoidal signal carrying no information.

It is to be understood that the secondary receiver of the terminal device may be a passive receiver. The first signal may supply energy to the secondary receiver of the terminal device, so that the secondary receiver of the terminal device is able to detect the first signal, so as to facilitate determination of whether to exit the energy-saving reception and/or transmission state according to the detected first signal.

In some embodiments, when the first signal is the power-supply signal with no information being transmitted, the terminal device directly exits the energy-saving reception and/or transmission state after receiving the first signal, and wakes up the primary receiver.

It is to be noted that, when the secondary receiver of the terminal device is the passive receiver, there may be a delay for an opportunity where the terminal device detects the first signal through the secondary receiver. The terminal device may detect, based on the energy supplied by the first signal transmitted on the current transmission resource, the first signal on the next transmission resource.

Exemplarily, the secondary receiver of the terminal device may be waked up by the energy supplied by the first signal transmitted on the transmission resource 1, and the secondary receiver may detect the first signal on the next transmission resource 2 by using the energy of the first signal transmitted on the transmission resource 1.

In some embodiments, the first signal may be a signal carrying identification information.

It is to be noted that, in this embodiment, the first signal may supply energy to the passive secondary receiver, to enable the passive secondary receiver to detect the first signal based on the energy.

It is to be understood that the identification information carried in the first signal may be used for distinguishing different terminal devices. When the identification information is carried in the first signal, the first signal may indicate the terminal device associated with the identification information to exit the energy-saving reception and/or transmission state.

In an embodiment, the first signal may carry one or multiple pieces of identification information, which is not limited in the embodiment of the present disclosure.

In some embodiments, the identification information includes one or more of the following:
identification information of a cell that is accessed;
identification information of the terminal device; or
identification information of a group to which the terminal device belongs.

It is to be understood that the first signal sent by the network device may be specific for a cell, an individual terminal device, or terminal devices belonging to different groups.

When the identification information of the cell that is accessed is carried in the first signal, the first signal may indicate all terminal devices accessing the cell associated with the identification information to exit the energy-saving reception and/or transmission state. When the identification information of the terminal device is carried in the first signal, the first signal may indicate the terminal device associated with the identification information to exit the energy-saving reception and/or transmission state. When the identification information of a group to which the terminal device belongs is carried in the first signal, the first signal may indicate all terminal devices in the terminal device group associated with the identification information to exit the energy-saving reception and/or transmission state. In this way, the network device may carry identification information associated with the terminal device that needs to be waked up in the first signal according to the actual demand.

In some embodiments, when the identification information is carried in the first signal, the terminal device may determine whether to exit the energy-saving reception and/or transmission state in the following manner.

If the identification information carried in the first signal matches with identification information configured by the terminal device, the terminal device exits the energy-saving reception and/or transmission state.

That is to say, the terminal device may compare the identification information carried in the first signal with the identification information configured by the terminal device, to determine whether the two pieces of identification information are identical to each other. If the two pieces of identification information are identical to each other, the terminal device determines to exit the energy-saving reception and/or transmission state. If the two pieces of identification information are not identical to each other, the terminal device maintains the current energy-saving reception and/or transmission state unchanged.

It is to be noted that the identification information of the cell that is accessed by the terminal device and the identification information of the group to which the terminal device belongs may be obtained through a registration procedure of the terminal device. The identification information of the terminal device may be a terminal device-inherent Identification (ID).

In an embodiment, after receiving the first signal, the terminal device may match the identification information carried in the first signal with the identification information of the cell that is accessed, the terminal device-inherent identification information, and the identification information of the group to which the terminal device belongs. It is to be noted that the terminal device may exit the energy-saving reception and/or transmission state when the identification information carried in the first signal matches with any one piece of the aforementioned identification information.

In some embodiments, when the identification information is carried in the first signal, the terminal device may further determine whether to exit the energy-saving reception and/or transmission state in the following manner.

In a case where a received power of the first signal is greater than or equal to a first threshold, if the identification information carried in the first signal matches with the identification information configured by the terminal device, the terminal device exits the energy-saving reception and/or transmission state.

It is to be understood that the network uses a different transmit power to send the first signal on each transmission resource of at least some of transmission resources in the transmission resource set. Correspondingly, the received powers of the first signal detected by the terminal device on all transmission resource are different. Only when the received power is sufficiently strong can the terminal device decode the first signal to obtain the information bits carried in the first signal.

Based on this, the terminal device may determine the received power of the received first signal, and in the case where the received power of the first signal is greater than or equal to the first threshold, the terminal device may compare the identification information carried in the first signal with the identification information that has been configured by the terminal device, to determine whether the two pieces of identification information are identical. If the two pieces of identification information are identical to each other, the terminal device determines to exit the energy-saving reception and/or transmission state. If the two pieces of identification information are not identical to each other, the terminal device maintains the current energy-saving reception and/or transmission state unchanged.

In an embodiment, the first threshold may be configured by the network device or may be predefined, which is not limited in the embodiment of the present disclosure. Exemplarily, the first threshold may have a value of -20 dBm, -40 dBm, -60 dBm, -80 dBm, etc., which is not limited in the embodiment of the present disclosure.

It is to be noted that in addition to detecting the received power, the terminal device may further detect whether a signal-to-noise ratio of the first signal satisfies a condition or whether a signal quality of the first signal satisfies a condition. The terminal device may determine whether to exit the energy-saving reception and/or transmission state in a case where the terminal device detects that the signal-to-noise ratio of the first signal satisfies the condition or the signal quality of the first signal satisfies the condition.

In some embodiments, after the terminal device exits the energy-saving reception and/or transmission state, the following operation may be further performed.

The terminal device stops detecting the first signal on other undetected transmission resources among the at least some of the transmission resources in the transmission resource set.

It is to be understood that after the terminal device exits the energy-saving reception and/or transmission state, i.e., after the terminal device wakes up the primary receiver, the terminal device may control the secondary receiver to stop detecting the first signal on the subsequent time-domain units and/or frequency-domain units. In this way, additional power consumption caused by detecting the first signal for multiple times in the non-energy-saving reception and/or transmission state can be avoided, and moreover, it can also avoid the terminal device from repeatedly waking up the primary receiver.

In some embodiments, a time-frequency resource for data transceiving after the terminal device exits the energy-saving reception and/or transmission state is determined based on a first transmission resource and/or the identification information configured by the terminal device. The first transmission resource is a transmission resource on which the terminal device receives the first signal.

It is to be understood that at the same time when the terminal device determines to exit the energy-saving reception and/or transmission state according to the received first signal, it may further determine the time-frequency resource on which the terminal device performs the data transceiving after the terminal device exits the energy-saving reception and/or transmission state. That is to say, after the terminal device determines to wake up the primary receiver according to the received first signal, the terminal device may simultaneously determine the time-frequency resource on which the primary receiver performs the uplink data transmission and/or the downlink data transmission.

In an embodiment, the terminal device may determine the time-frequency resource on which the primary receiver performs the data transceiving after the terminal device exits the energy-saving reception and/or transmission state according to the first transmission resource (i.e., the transmission resource on which the terminal device receives the first signal).

In a possible implementation, the time-frequency resource on which the primary receiver performs the data transceiving after the terminal device exits the energy-saving reception and/or transmission state may be determined according to a sum of the first transmission resource and a resource offset.

It is to be noted that the resource offset may be predefined in the protocol or configured by the network device, which is not limited in the embodiment of the present disclosure.

Exemplarily, the resource offset may include a frequency-domain offset F0 and a time-domain offset T0. After the terminal device receives the first signal on a frequency-domain resource F1 and a time-domain resource T1, and determines to exit the energy-saving reception and/or transmission state, the terminal device may determine that the primary receiver performs the data transceiving at the frequency-domain position F2 = (F1-F0) and the time-domain position T2 = (T1+T0).

In another possible implementation, the terminal device may determine the time-frequency resource on which the primary receiver performs the data transceiving after the terminal device exits the energy-saving reception and/or transmission state according to the first transmission resource and a first mapping relationship. The first mapping relationship is used for representing a mapping relationship between the first transmission resource and the time-frequency resource on which the primary receiver performs the data transceiving. It is to be understood that there is a certain mapping relationship between the first transmission resource on which the terminal device receives the first signal and the time-frequency resource on which the primary receiver performs the data transceiving, and after the terminal device receives the first signal, the terminal device may determine the time-frequency resource associated with the time-frequency resource for receiving the first signal according to the first mapping relationship. In this way, the primary receiver of the terminal device may perform the uplink data transmission and/or the downlink data transmission according to the determined time-frequency resource.

In an embodiment, the terminal device may determine the time-frequency resource on which the primary receiver performs the data transceiving after the terminal device exits the energy-saving reception and/or transmission state according to the identification information configured by the terminal device.

In an embodiment, the terminal device may determine the time-frequency resource on which the primary receiver performs the data transceiving after the terminal device exits the energy-saving reception and/or transmission state according to the identification information configured by the terminal device and a second mapping relationship.

The second mapping relationship is used for representing a mapping relationship between the identification information configured by the terminal device and the time-frequency resource on which the primary receiver performs the data transceiving. It is to be understood that there is a certain mapping relationship between the identification information configured by the terminal device and the time-frequency resource on which the primary receiver performs the data transceiving, and the terminal device may determine the time-frequency resource associated with identification information configured by the terminal device according to the second mapping relationship. In this way, the primary receiver of the terminal device may perform the uplink data transmission and/or the downlink data transmission according to the determined time-frequency resource.

Similar to the aforementioned embodiment, the identification information configured by the terminal device may include: identification information of a cell that is accessed, identification information of the terminal device, and identification information of a group to which the terminal device belongs, which is not limited in the embodiment of the present disclosure.

It is to be noted that the first mapping relationship and/or the second mapping relationship may be configured by the network or may be predefined, which is not limited in the embodiment of the present disclosure.

In summary, while the terminal device determines to exit the energy-saving reception and/or transmission state according to the received first signal, the terminal device may further determine the time-frequency resource on which the primary receiver performs the data transceiving after the terminal device exits the energy-saving reception and/or transmission state, thereby improving the flexibility of resource allocation.

In some embodiments, after the terminal device completes the data transceiving in a non-energy-saving reception and/or transmission state, the terminal device enters the energy-saving reception and/or transmission state.

It is to be understood that after the primary receiver of the terminal device completes the data transceiving, the terminal device may control the primary receiver to be turned off. In this way, the terminal device may re-enter the energy-saving reception and/or transmission state, and continue to detect the first signal on each transmission resource of some of transmission resources in the transmission resource set.

In some embodiments, in a case where the first signal is not detected, or in a case where the identification information carried in the first signal does not match with the identification information configured by the terminal device, the terminal device continues to detect the first signal on the other undetected transmission resources among the some of the transmission resources in the transmission resource set.

That is to say, when the terminal device does not detect its own first signal, that is to say, when the terminal device does not detect the first signal, or when the identification information carried in the detected first signal does not match with the identification information configured by the terminal device, the terminal device may continue to detect the first signal on other transmission resources after the current transmission resource.

In summary, in the embodiment of the present disclosure, the network device may send the first signal at different transmit powers, to wake up the receiver of the terminal device in the cell in batches, therefore, the first signal of the terminal device can be multiplexed by maximizing the utilization of limited radio resources.

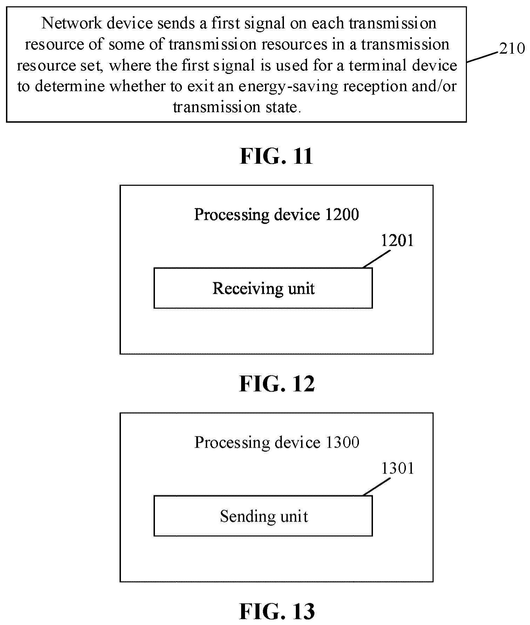

Based on the same inventive concepts as the aforementioned embodiments, an embodiment of the present disclosure further provides a processing method applied to the network device. With reference to FIG. 11, the processing method provided by the embodiment of the present disclosure may include the following operation 210.

In operation 210, the network device sends a first signal on each transmission resource of some of transmission resources in a transmission resource set, where the first signal is used for a terminal device to determine whether to exit an energy-saving reception and/or transmission state.

In an embodiment, the first signal is a signal received based on at least one of: envelope detection, amplitude detection, frequency detection, or phase detection. That is to say, the first signal may be modulated by a modulation manner, such as ASK, OOK, FSK, or PSK, and correspondingly, the waveform of the first signal may be the waveform formed by the ASK modulation, OOK modulation, FSK modulation, PSK modulation, etc.

It is to be noted that the network device may generate the first signal by the modulation manner such as the ASK, the OOK, the FSK, or the PSK, and may perform the modulation by other modulation manners to simulate the waveform of the ASK, the OOK, the FSK, or the PSK, which is not limited in the embodiment of the present disclosure.

In an embodiment, the information carried in the first signal sent on each transmission resource may be the same or different, which is not limited in the embodiment of the present disclosure.

In an embodiment, the transmission resource set may be configured by the network. Exemplarily, the network device may configure a specific position of each transmission resource in the transmission resource set for the terminal device by dedicated signaling or multiplexing other signaling before the terminal device enters the energy-saving reception and/or transmission state. In addition, the transmission resource set may be predefined in the protocol or determined by the terminal device according to a preset rule, which is not limited in the embodiment of the present disclosure.

In an embodiment, the first signal may be the wake-up signal (WUS) for indicating the terminal device to exit the energy-saving reception and/or transmission state, to wake up the primary receiver of the terminal device. The first signal may be other types of signals, which is not limited in the embodiment of the present disclosure.

It is to be noted that the energy-saving reception and/or transmission state may be a low-power-consumption reception and/or transmission state of the terminal device. In this state, the terminal device may turn off the primary receiver and turn on only the secondary receiver for data transceiving, so as to reduce the power consumption of the terminal device. In the embodiment of the present disclosure, the terminal device determines whether to exit the energy-saving reception and/or transmission state according to the first signal. That is to say, the terminal device determines whether to maintain the current energy-saving reception and/or transmission state or switch to the normal reception and/or transmission state according to the first signal. In addition, the operation that the terminal device determines whether to exit the energy-saving reception and/or transmission state according to the first signal, which may also be understood as that the terminal device determines whether to turn on the primary receiver for data transceiving according to the first signal.

In some embodiments, transmit powers of the first signal sent on different transmission resources are different.

It is to be understood that the coverages of the first signal corresponding to different transmit powers are different. The greater the transmit power of the first signal, the larger the coverage of the corresponding first signal; and the smaller the transmit power of the first signal, the smaller the coverage of the corresponding first signal.

Exemplarily, with reference to FIG. 7, the network device may transmit the first signal on three transmission resources, and the transmit power of the first signal transmitted on the first transmission resource is power 1, the transmit power of the first signal transmitted on the second transmission resource is power 2, and the transmit power of the first signal transmitted on the third transmission resource is power 3, where power 1 < power 2 < power 3. The first signal transmitted on the third transmission resource by the network device has the largest coverage and the first signal transmitted on the first transmission resource by the network device has the smallest coverage.

It can be seen that whether the terminal device is able to detect the first signal on a certain transmission resource may be related to the location of the terminal device. If the terminal device is within the coverage of the first signal transmitted on the certain transmission resource, the terminal device may detect the first signal; otherwise, the terminal device is unable to detect and receive the first signal on the transmission resource.

That is to say, different terminal devices within the coverage of the network device may detect and acquire the first signal on different transmission resources.

Taking FIG. 7 as an example, when the network device transmits the first signal on the first transmission resource, the UE1 may detect the first signal, and thus, the network device may wake up the UE1 on the first transmission resource and the UE1 exits the energy-saving reception and/or transmission state. When the network device transmits the first signal on the second transmission resource, the UE2 and UE3 may detect the first signal on the second transmission resource, and thus, the network device may wake up the UE2 and UE3 on the second transmission resource and the UE2 and UE3 exit the energy-saving reception and/or transmission state. Similarly, when the network device transmits the first signal on the third transmission resource, the UE4, UE5 and UE6 may detect the first signal, and thus, the network device may wake up the UE4, UE5 and UE6 on the third transmission resource, and the UE4, UE5 and UE6 exit the energy-saving reception and/or transmission state.

As can be seen, the network device may indicate the terminal devices to exit the energy-saving reception and/or transmission state in batches by using the geographical location difference between different terminal devices, which avoids the problem of communication congestion caused by simultaneously waking up a large number of terminal devices, and can maximize the utilization of limited radio resources.

In an embodiment, transmit powers of the first signal transmitted on different transmission resources being different may include: transmit powers of the first signal transmitted on different transmission resources have different values, or transmit powers of the first signal transmitted on different transmission resources have different power levels, which is not limited in the present disclosure.

In an embodiment, the values or power levels of the transmit powers of the first signal transmitted on at least some of transmission resources in the transmission resource set may be a set of discrete values. Exemplarily, a value of the transmit power per unit frequency of the first signal transmitted on each transmission resource may be Pₘₐₓ-x, where Pₘₐₓ is the maximum transmission power of the first signal per unit frequency, the value of x corresponding to each transmission resources is different, and the values of x may be {-12 dB, -9 dB, -6 dB, -3 dB, 0 dB}, etc.

In some embodiments, the transmission resources may include time-domain resources and/or frequency-domain resources. That is to say, the network device may send the first signal on multiple time-domain units, and/or multiple frequency-domain units.

In an embodiment, the time-domain unit may be a slot, a micro slot, a time-domain symbol, a time-domain symbol set, etc., which is limited in the embodiment of the present disclosure.

In an embodiment, the frequency-domain unit may include a subcarrier, a subcarrier set, etc., which is not limited in the embodiment of the present disclosure.

In some embodiments, the transmit powers of the first signal transmitted on different transmission resources being different may be understood as that: the transmit powers of the first signal transmitted on different time-domain units are different, and/or that the transmit powers of the first signal transmitted on the different frequency-domain units are different.

In a possible implementation, the network device may send the first signal in different transmit powers on different time-domain units.

It is to be noted that transmit powers of the first signal transmitted on different time-domain units may not be correlated with a temporal order of the time-domain units. In addition, the transmit powers of the first signal transmitted on different time-domain units may be correlated with a temporal order of the time-domain units, which is not limited in the embodiment of the present disclosure.

In an embodiment, in the case where the transmit powers of the first signal transmitted on different time-domain units may be correlated with the temporal order of the time-domain units, the temporal order of the multiple time-domain units is positively correlated or negatively correlated with an order of the transmit powers of the first signal transmitted on the multiple time-domain units.

The temporal order of the multiple time-domain units is positively correlated with the order of the transmit powers of the first signal transmitted on the multiple time-domain units, which means that the transmit powers of the first signal transmitted on different time-domain units may be in an ascending order according to the temporal order of the time-domain units. Specifically, a transmit power of the first signal transmitted on a time-domain unit with the earlier temporal order is smaller than a transmit power of the first signal transmitted on a time-domain unit with the later temporal order.

In addition, the temporal order of the multiple time-domain units is negatively correlated with the order of the transmit powers of the first signal transmitted on the multiple time-domain units, which means that the transmit powers of the first signal transmitted on different time-domain units may be in a descending order according to temporal order of the time-domain units. Specifically, the transmit power of the first signal transmitted on the time-domain unit with the earlier temporal order is greater than the transmit power of the first signal transmitted on the time-domain unit with the later temporal order.

It is to be noted that the positive correlation and the negative correlation may be the linear correlation, i.e., the differences between transmit powers of the first signal transmitted on different time-domain units are the same. The positive correlation and the negative correlation may be the non-linear correlation, i.e., the differences between transmit powers of the first signal transmitted on different time-domain units are different.

Exemplarily, with reference to FIG. 8, the network device may send the first signal in slot 1 to slot 4 on the time domain. The transmit power of the first signal in slot 1 is power 1, the transmit power of the first signal in slot 2 is power 2, the transmit power of the first signal in slot 3 is power 3, and the transmit power of the first signal in slot 4 is power 4, where power 1 < power 2 < power 3 < power 4. Accordingly, the terminal device may detect the first signal in each of the slot 1 to slot 4 according to the temporal order of the slots.

In another possible implementation, the network device may send the first signal at different transmit powers on different frequency-domain units.

It is to be noted that transmit powers of the first signal transmitted on different frequency-domain units may not be correlated with an order of frequencies of the frequency-domain units. In addition, the transmit powers of the first signal transmitted on different frequency-domain units may be correlated with the order of frequencies of the frequency-domain units, which is not limited in the embodiment of the present disclosure.

In an embodiment, the order of frequencies of multiple frequency-domain units is positively correlated or negatively correlated with the order of the transmit powers of the first signal transmitted on the multiple frequency-domain units.

The temporal order of the multiple frequency-domain units is positively correlated with the order of the transmit powers of the first signal transmitted on the multiple frequency-domain units, which means that the transmit powers of the first signal transmitted on different frequency-domain units may be in an ascending order according to the order of frequencies of the frequency-domain units. Specifically, a transmit power of the first signal transmitted on a frequency-domain unit with a high frequency is greater than a transmit power of the first signal transmitted on a frequency-domain unit with a low frequency.

In addition, the temporal order of the multiple frequency-domain units is negatively correlated with the order of the transmit powers of the first signal transmitted on the multiple frequency-domain units, which means that the transmit powers of the first signal transmitted on different frequency-domain units may be in a descending order according to the order of frequencies of the frequency-domain units. Specifically, a transmit power of the first signal transmitted on a frequency-domain unit with a high frequency is smaller than a transmit power of the first signal transmitted on a frequency-domain unit with a low frequency.

It is to be noted that the positive correlation and the negative correlation in the aforementioned embodiment may be the linear correlation, i.e., the differences between transmit powers of the first signal transmitted on different frequency-domain units are the same. The positive correlation and the negative correlation may be the non-linear correlation, i.e., the differences between transmit powers of the first signal transmitted on different frequency-domain units are different.

Exemplarily, with reference to FIG. 9, the network device may send the first signal on subcarrier 1 to subcarrier 4 on the frequency-domain bandwidth. The transmit power of the first signal on subcarrier 1 is power 1, the transmit power of the first signal on subcarrier 2 is power 2, the transmit power of the first signal on subcarrier 3 is power 3, and the transmit power of the first signal on subcarrier 4 is power 4, where power 1 < power 2 < power 3 < power 4. Accordingly, the terminal device may detect the first signal on each of the subcarrier 1 to subcarrier 4 according to the order of frequencies.

In yet another possible implementation, the network device may send the first signal at different transmit powers on different time-domain units and frequency-domain units. That is to say, the terminal device expects that the transmit powers of the first signal transmitted on different time-domain units and frequency-domain units are different.

It is to be noted that, in the implementation, transmit powers of the first signal transmitted on the time-domain units and the frequency-domain units may not be correlated with the temporal order of the time-domain units and the order of frequencies of the frequency-domain units. In addition, transmit powers of the first signal transmitted on different frequency-domain units may be correlated with the temporal order of the time-domain units and/or the order of frequencies of the frequency-domain units, which is not limited in the embodiment of the present disclosure.

Exemplarily, with reference to FIG. 10, the network device may send the first signal with power 1 on slot 1 and subcarrier 1, send the first signal with power 2 on slot 2 and subcarrier 2, send the first signal with power 3 on slot 3 and subcarrier 3, and send the first signal with power 4 on slot 4 and subcarrier 4, where power 1 < power 2 < power 3 < power 4. Accordingly, the terminal device may detect the first signal in each of the slot 1 to slot 4 according to the temporal order of the slots and the order of frequencies of the subcarriers.

In some embodiments, the transmission resource set includes transmission resources within each of one or more first time periods.

In an embodiment, the first time period may be a period where the terminal device detects the first signal.

In an embodiment, the first time period may be configured by the network. Exemplarily, the network device may configure the first time period for the terminal device by dedicated signaling or multiplexing other signaling before the terminal device enters the energy-saving reception and/or transmission state. In addition, the first time period may be predefined in the protocol or determined by the terminal device according to a preset rule, which is not limited in the embodiment of the present disclosure.

It is to be noted that, in the case where the network device configures the first time period for the terminal device, the network device may configure the first time period and the specific position of each transmission resource in the transmission resource set for the terminal device through the same signaling; or may configure the first time period and the specific position of each transmission resource in the transmission resource set for the terminal device through different signaling, which is not limited in the embodiment of the present disclosure.

In another possible implementation, the terminal device may detect the first signal on fixed multiple transmission resources. The terminal device may detect the first signal only on the fixed transmission resources.

In some embodiments, the first signal may be a power-supply signal with no information being transmitted. Exemplarily, the first signal may be a sinusoidal signal carrying no information.

It is to be understood that the secondary receiver of the terminal device may be a passive receiver. The first signal may supply energy to the secondary receiver of the terminal device, so that the secondary receiver of the terminal device is able to detect the first signal, so as to facilitate determination of whether to exit the energy-saving reception and/or transmission state according to the detected first signal.

In some embodiments, when the first signal is a power-supply signal with no information being transmitted, the terminal device directly exits the energy-saving reception and/or transmission state after receiving the first signal, and wakes up the primary receiver.

It is to be noted that, when the secondary receiver of the terminal device is a passive receiver, there may be a delay for an opportunity where the terminal device detects the first signal through the secondary receiver. The terminal device may detect, based on the energy provided by the first signal transmitted on the current transmission resource, the first signal on the next transmission resource.

Exemplarily, the secondary receiver of the terminal device may be waked up by the energy supplied by the first signal transmitted on the transmission resource 1, and the secondary receiver may detect the first signal on the next transmission resource 2 by using the energy of the first signal transmitted on the transmission resource 1.

In some embodiments, the first signal is a signal carrying identification information.

It is to be noted that, in this embodiment, the first signal may supply energy to the passive secondary receiver, to enable the passive secondary receiver to detect the first signal based on the energy.

It is to be understood that the identification information carried in the first signal may be used for distinguishing different terminal devices. When the identification information is carried in the first signal, the first signal may indicate the terminal device associated with the identification information to exit the energy-saving reception and/or transmission state.

In an embodiment, the first signal may carry one or multiple pieces of identification information, which is not limited in the embodiment of the present disclosure.

In some embodiments, the identification information includes one or more of the following:
identification information of a cell that is accessed;
identification information of the terminal device; or
identification information of a group to which the terminal device belongs.

It is to be understood that the first signal sent by the network device may be specific for a cell, an individual terminal device, or terminal devices belonging to different groups.

When the identification information of the cell that is accessed is carried in the first signal, the first signal may indicate all terminal devices accessing the cell associated with the identification information to exit the energy-saving reception and/or transmission state. When the identification information of the terminal device is carried in the first signal, the first signal may indicate the terminal device associated with the identification information to exit the energy-saving reception and/or transmission state. When the identification information of a group to which the terminal device belongs is carried in the first signal, the first signal may instruct all terminal devices in the terminal device group associated with the identification information to exit the energy-saving reception and/or transmission state. In this way, the network device may carry identification information associated with the terminal device that needs to be waked up in the first signal according to the actual demand.

In summary, the network device in the embodiment of the present disclosure may transmit first signal at different transmit powers, and the terminal device may detect and decode the first signal, so that the secondary receivers of a large number of terminal devices can effectively receive the first signal and then transmit data. In the embodiment of the present disclosure, through the time/frequency-distinguished wake-up implemented by the geographical location difference between different terminal devices, the terminal devices may be waked up batch by batch. In this way, the first signal of the terminal device can be multiplexed by maximizing the utilization of limited radio resources.

Hereinafter, the aforementioned embodiment is described with reference to specific application scenarios.

### Embodiment One

In the embodiment, time division may be used to wake up the primary receiver of the terminal device.

In operation 1, the network device sends the WUS at multiple power levels. The WUS at different power levels corresponds to different slots in the downlink time domain.

Herein, the WUS may be understood as the first signal in the aforementioned embodiment.

In an embodiment, the power values corresponding to the different transmit powers of the WUS per unit frequency are a set of discrete values. The transmit powers of the WUS per unit frequency have a value of Pₘₐₓ₋ₓ, where x = {-12 dB, -9 dB,-6 dB,-3 dB, 0 dB}, etc. Pmax is the maximum transmit power of the WUS per unit frequency.

In an embodiment, with reference to FIG. 8, the WUS at different power levels sent by the network device corresponds to multiple slots in a wake-up period (i.e., the first period in the aforementioned embodiment). According to the ascending order of the slots corresponding to the magnitudes of the powers, the WUS at the smaller power levels correspond to earlier slots.

In an embodiment, the WUS is sent in a modulated binary sequence.

In an embodiment, the WUS may carry identification information, the identification information may include: identification information of a cell that is accessed, identification information of the terminal device, and identification information of a group to which the terminal device belongs.

In operation 2, the terminal device detects the WUS sent by the network device during the wake-up period. The terminal device determines whether to exit the energy-saving reception and/or transmission state according to the detected WUS.

In an embodiment, the WUS may be a power-supply signal with no information being transmitted, and when the received power of the WUS detected by the terminal device exceeds the first threshold, the terminal device exits the energy-saving reception and/or transmission state, and turn on the primary receiver to perform the data transceiving.

In an embodiment, the WUS carries identification information, and when the received power of the WUS detected by the terminal device exceeds the first threshold, the terminal device may further detect the information carried by the WUS. When the identification information configured by the terminal device is detected, the terminal device exits the energy-saving reception and/or transmission state and turn on the primary receiver to perform the data transceiving.

In an embodiment, the time-frequency resource on which the primary transceiver performs the uplink data transmission and/or downlink data transmission is determined according to the time-frequency resource on which the WUS is detected, or determined according to the identification information configured by the terminal device.

In an embodiment, after the primary receiver completes the data transceiving, the terminal device enters the energy-saving state and continues to detect the WUS according to the wake-up period.

### Embodiment Two

In the embodiment, frequency division may be used to wake up the primary receiver of the terminal device.

In operation 1, the network device sends the WUS at multiple power levels. The WUS at different power levels corresponds to different slots in the downlink time domain.

Herein, the WUS may be understood as the first signal in the aforementioned embodiment.

In an embodiment, the power values corresponding to the transmit power of different WUS per unit frequency are a set of discrete values. The transmit powers of the WUS per unit frequency have a value of Pmax-x, where x = {-12 dB, -9 dB,-6 dB,-3 dB, 0 dB}, etc. Pmax is the maximum transmit power of the WUS per unit frequency.

In an embodiment, with reference to FIG. 9, the WUS of different power levels sent by the network device corresponds to multiple subcarriers in a wake-up period (i.e., the first period in the aforementioned embodiment). According to the ascending order of the frequencies of the subcarriers corresponding to the magnitude of the power, the WUS at the higher power levels corresponds to the subcarriers having the high frequencies.

In an embodiment, the WUS is sent in a modulated binary sequence.

In an embodiment, the WUS may carry identification information, the identification information may include: identification information of a cell that is accessed, identification information of the terminal device, and identification information of a group to which the terminal device belongs.

In operation 2, the terminal device detects the WUS sent by the network device during the wake-up period. The terminal device determines whether to exit the energy-saving reception and/or transmission state according to the detected WUS.

In an embodiment, the WUS may be a power-supply signal with no information being transmitted, and when the received power of the WUS detected by the terminal device exceeds the first threshold, the terminal device exits the energy-saving reception and/or transmission state, and turn on the primary receiver to perform the data transceiving.

In an embodiment, the WUS carries identification information, and when the received power of the WUS detected by the terminal device exceeds the first threshold, the terminal device may further detect the information carried by the WUS. When the identification information configured by the terminal device is detected, the terminal device exits the energy-saving reception and/or transmission state and turn on the primary receiver to perform the data transceiving.

In an embodiment, the time-frequency resource on which the primary transceiver performs the uplink data transmission and/or downlink data transmission is determined according to the time-frequency resource on which the WUS is detected, or determined the according to the identification information configured by the terminal device.

In an embodiment, after the primary receiver completes the data transceiving, the terminal device enters the energy-saving state is entered and continues to detect the WUS according to the wake-up period.

Those skilled in the art will appreciate that the related descriptions of the processing method in the embodiments of the present disclosure may be understood with reference to the descriptions of the processing method in the aforementioned embodiments of the present disclosure.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical solution of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no conflict, various embodiments described in the present disclosure and/or the technical features in the various embodiments may be combined with the related art in any manner. The technical solutions obtained after the combination shall also fall within the scope of protection of the present disclosure.

It should be understood that, in various method embodiments of the present disclosure, the size of the sequence number of the aforementioned processes does not imply the sequence of execution. The sequence of execution of the processes shall be determined by functions and inherent logic thereof, and shall not constitute any limitation on the implementation processes of the embodiments of the present disclosure. Furthermore, in the embodiments of the present disclosure, the terms "downlink", "uplink" and "sidelink" are used to represent a transmission direction of a signal or data. Herein, the term "downlink" is used to represent that the transmission direction of the signal or data is a first direction transmitted from a station to a user device in a cell; the term "uplink" is used to represent that the transmission direction of the signal or data is a second direction transmitted from the user device in the cell to the station; and the term "sidelink" is used to represent that the transmission direction of the signal or data is a third direction transmitted from a user device 1 to a user device 2. For example, a "downlink signal" means that the signal is transmitted in the first direction. In addition, in the embodiments of the present disclosure, the term "and/or" herein is only used to indicate an association relationship for describing associated objects, and represents that three kinds of relationships may exist. Specifically, "A and/or B" may represent three conditions, i.e., independent existence of A, existence of both A and B, and independent existence of B. Additionally, the character "/" in the present disclosure usually represents that previous and next associated objects form an "or" relationship.

FIG. 12 is a schematic structural diagram of a processing device 1200 according to an embodiment of the present disclosure. The processing device 1200 is applied to a terminal device, as shown in FIG. 12, and includes a receiving unit 1201.

The receiving unit 1201 is configured to receive a first signal, where the first signal is used for determining whether to exit an energy-saving reception and/or transmission state.

In an embodiment, the receiving unit 1201 is configured to detect the first signal on each transmission resource of at least some of transmission resources in a transmission resource set, and the first signal is sent on each transmission resource.

In an embodiment, the receiving unit 1201 expects that transmit powers of the first signal transmitted on different transmission resources are different.

In an embodiment, the first signal is transmitted in multiple time-domain units, and/or multiple frequency-domain units.

In an embodiment, the receiving unit 1201 expects that the transmit powers of the first signal transmitted on different time-domain units are different, and/or that the transmit powers of the first signal transmitted on the different frequency-domain units are different.

In an embodiment, a temporal order of multiple time-domain units is positively correlated or negatively correlated with an order of the transmit powers of the first signal transmitted on the multiple time-domain units.

In an embodiment, an order of frequencies of multiple frequency-domain units is positively correlated or negatively correlated with an order of the transmit powers of the first signal transmitted on the multiple frequency-domain units.

In an embodiment, the transmission resource set includes multiple transmission resources within each of one or more first time periods.

In an embodiment, the first signal is a power-supply signal with no information being transmitted, or the first signal is a signal carrying identification information, and the identification information includes one or more of:
identification information of a cell that is accessed;
identification information of the terminal device; or
identification information of a group to which the terminal device belongs.

In an embodiment, the first signal is a power-supply signal with no information being transmitted, and the processing device 1200 further includes a processing unit configured to exit the energy-saving reception and/or transmission state.

In an embodiment, the first signal carries identification information, and the processing unit is further configured to: if the identification information carried in the first signal matches with identification information configured by the terminal device, exit the energy-saving reception and/or transmission state.

In an embodiment, the first signal carries identification information, and the processing unit is further configured to: in a case where a received power of the first signal is greater than or equal to a first threshold, if the identification information carried in the first signal matches with identification information configured by the terminal device, exit the energy-saving reception and/or transmission state.

In an embodiment, the sending unit 1201 is further configured to stop detecting the first signal on other undetected transmission resources among the at least some of the transmission resources in the transmission resource set.

In an embodiment, a time-frequency resource for data transceiving after the terminal device exits the energy-saving reception and/or transmission state is determined based on a first transmission resource and/or the identification information configured by the terminal device, and the first transmission resource is a transmission resource on which the terminal device receives the first signal.

In an embodiment, the processing unit is further configured to: after the terminal device completes the data transceiving in a non-energy-saving reception and/or transmission state, enter the energy-saving reception and/or transmission state.

In an embodiment, the sending unit 1201 is further configured to: in a case where the first signal is not detected, or in a case where the identification information carried in the first signal does not match with the identification information configured by the terminal device, continue to detect the first signal on the other undetected transmission resources among the at least some of the transmission resources in the transmission resource set.

In an embodiment, the first signal is a signal received by the terminal device based on at least one of following manners: envelope detection, amplitude detection, frequency detection, or phase detection.

Those skilled in the art will appreciate that the related descriptions of the processing device in the embodiments of the present disclosure may be understood with reference to the descriptions of the processing method in the aforementioned embodiments of the present disclosure.

FIG. 13 is a schematic structural diagram of a processing device 1300 according to an embodiment of the present disclosure. The processing device 1300 is applied to a network device, as shown in FIG. 13, and includes a sending unit 1301.

The sending unit 1301 is configured to send a first signal on each transmission resource of at least some of transmission resources in a transmission resource set, where the first signal is used for a terminal device to determine whether to exit an energy-saving reception and/or transmission state.

In an embodiment, transmit powers of the first signal sent on different transmission resources are different.

In an embodiment, the transmission resource includes a time-domain unit and/or a frequency-domain unit.

In an embodiment, transmit powers of the first signal sent on different time-domain units are different.

The transmit powers of the first signal sent on the different frequency-domain units are different.

In an embodiment, a temporal order of multiple time-domain units is positively correlated or negatively correlated with an order of the transmit powers of the first signal transmitted on the multiple time-domain units.

In an embodiment, an order of frequencies of multiple frequency-domain units is positively correlated or negatively correlated with an order of the transmit powers of the first signal transmitted on the multiple frequency-domain units.

In an embodiment, the transmission resource set includes multiple transmission resources within each of one or more first time periods.

In an embodiment, the first signal is a power-supply signal with no information being transmitted, or the first signal is a signal carrying identification information, and the identification information includes one or more of:
identification information of a cell that is accessed;
identification information of the terminal device; or
identification information of a group to which the terminal device belongs.

In an embodiment, the first signal is a signal received by the terminal device based on at least one of following manners: envelope detection, amplitude detection, frequency detection, or phase detection.

Those skilled in the art will appreciate that the related descriptions of the processing device in the embodiments of the present disclosure may be understood with reference to the descriptions of the processing method in the aforementioned embodiments of the present disclosure.

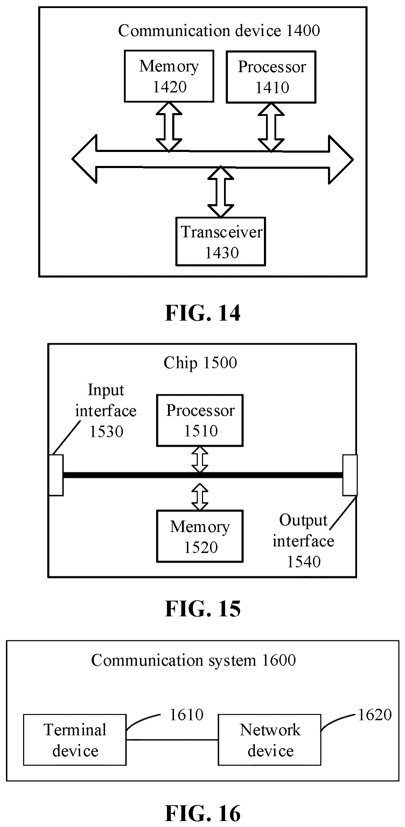

FIG. 14 is a schematic structural diagram of a communication device 1400 according to an embodiment of the present disclosure. The communication device may be a terminal device or a network device. The communication device 1400 illustrated in FIG. 14 includes a processor 1410. The processor 1410 may be configured to call and run a computer program stored in a memory to perform each of the methods according to the embodiments of the present disclosure.

In an embodiment, as illustrated in FIG. 14, the communication device 1400 may further include a memory 1420. Herein, the processor 1410 may be configured to call and run the computer program stored in the memory 1420 to perform each of the methods according to the embodiments of the present disclosure.

Herein, the memory 1420 may be a separate device independent of the processor 1410, or may be integrated into the processor 1410.

In an embodiment, as illustrated in FIG. 14, the communication device 1400 may further include a transceiver 1430. The processor 1410 may control the transceiver 1430 to communicate with other devices. Specifically, the transceiver 1430 may transmit information or data to other devices, or receive information or data from other devices.

Herein, the transceiver 1430 may include a transmitter and a receiver. The transceiver 1430 may further include one or more antennas.

In an embodiment, the communication device 1400 may specifically be the network device in the embodiments of the present disclosure. The communication device 1400 may implement corresponding processes that are implemented by the network device in each of the methods in the embodiments of the present disclosure. For brevity, details are not elaborated herein again.

In an embodiment, the communication device 1400 may specifically be the mobile terminal/terminal device in the embodiments of the present disclosure. The communication device 1400 may implement corresponding processes that are implemented by the mobile terminal/terminal device in each of the methods in the embodiments of the present disclosure. For brevity, details are not elaborated herein again.

FIG. 15 is a schematic structural diagram of a chip according to an embodiment of the present disclosure. The chip 1500 illustrated in FIG. 15 includes a processor 1510. The processor 1510 may be configured to call and run a computer program stored in a memory to perform each of the methods according to the embodiments of the present disclosure.

In an embodiment, as illustrated in FIG. 15, the chip 1500 may further include a memory 1520. Herein, the processor 1510 may be configured to call and run the computer program stored in the memory 1520 to perform each of the methods according to the embodiments of the present disclosure.

Herein, the memory 1520 may be a separate device independent of the processor 1510, or may be integrated into the processor 1510.

In an embodiment, the chip 1500 may further include an input interface 1530. Herein, the processor 1510 may control the input interface 1530 to communicate with other devices or chips. Specifically, the input interface 1530 may obtain information or data from other devices or chips.

In an embodiment, the chip 1500 may further include an output interface 1540. Herein, the processor 1510 may control the output interface 1540 to communicate with other devices or chips. Specifically, the output interface 1540 may output information or data to other devices or chips.

In an embodiment, the chip may be applied to the network device in the embodiments of the present disclosure. The chip may implement the corresponding processes implemented by the network device in each of the methods in the embodiments of the present disclosure. For brevity, details are not elaborated herein again.

In an embodiment, the chip may be applied to the mobile terminal/terminal device in the embodiments of the present disclosure. The chip may implement the corresponding processes implemented by the mobile terminal/terminal device in each of the methods in the embodiments of the present disclosure. For brevity, details are not elaborated herein again.

It should be understood that, the chip referred to in the embodiments of the present disclosure may also be referred to as a system-level chip, a system chip, a chip system, or a system-on-chip, etc.

FIG. 16 is a schematic block diagram of a communication system 1600 according to an embodiment of the present disclosure. As illustrated in FIG. 16, the communication system 1600 includes a terminal device 1610 and a network device 1620.

Herein, the terminal device 1610 may be configured to implement the corresponding functions implemented by the terminal device in the foregoing methods. The network device 1620 may be configured to implement the corresponding functions implemented by the network device in the foregoing methods. For brevity, details are not elaborated herein again.

It should be understood that the processor in the embodiments of the present disclosure may be an integrated circuit chip having a signal processing capability. During an implementation process, various operations in the aforementioned method embodiments may be implemented by using an integrated logic circuit in a hardware form in the processor or implemented by using instructions in a software form. The foregoing processor may be a general-purpose processor, a digital signal processor (DSP), an application-specific integrated circuit (ASIC), a field programmable gate array (FPGA), or another programmable logical device, discrete gate or transistor logical device, or discrete hardware component. Various methods, operations and logical block diagrams disclosed in the embodiments of the present disclosure may be implemented or executed. The general-purpose processor may be a microprocessor, or the processor may be any conventional processor or the like. Operations in combination with the method disclosed in the embodiments of the present disclosure may be directly embodied to be executed and completed by a hardware decoding processor, or by a combination of hardware and software modules in the decoding processor. The software module may be located in a mature storage medium in the field, such as a random access memory (RAM), a flash memory, a read-only memory (ROM), a programmable ROM (PROM), an electrically-erasable programmable memory, a register a register, or the like. The storage medium is located in the memory, and the processor reads information in the memory to complete the operations of the foregoing methods in combination with hardware of the processor.

It can be understood that the memory in the embodiments of the present disclosure may be a volatile memory or a non-volatile memory, or may include both the volatile memory and the non-volatile memory. The non-volatile memory may be an ROM, a PROM, an erasable PROM (EPROM), an electrically EPROM (EEPROM) or a flash memory. The volatile memory may be an RAM and is used as an external high-speed cache. It is exemplarily but unlimitedly described that RAMs in various forms may be adopted, such as a static RAM (SRAM), a dynamic RAM (DRAM), a synchronous DDRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and methods described herein is intended to include, but not be limited to, memories of these and any other suitable types.

It should be understood that the aforementioned memory is described only exemplarily rather than limitedly. For example, the memory in the embodiments of the present disclosure may be an SRAM, a DRAM, an SDRAM, a DDR SDRAM, an ESDRAM, an SLDRAM, a DR RAM, or the like. That is, the memory in the embodiments of the present disclosure is intended to include, but not be limited to, memories of these and any other suitable types.

An embodiment of the present disclosure further provides a computer-readable storage medium configured to store a computer program.

In an embodiment, the computer-readable storage medium may be applied to the network device in the embodiments of the present disclosure, and the computer program causes a computer to perform the corresponding processes performed by the network device in various methods of the embodiments of the present disclosure. For brevity, details are not elaborated herein again.

In an embodiment, the computer-readable storage medium may be applied to the mobile terminal/terminal device in the embodiments of the present disclosure, and the computer program causes a computer to perform the corresponding processes performed by the mobile terminal/terminal device in various methods of the embodiments of the present disclosure. For brevity, details are not described herein again.

An embodiment of the present disclosure further provides a computer program product, which includes computer program instructions.

In an embodiment, the computer program product may be applied to the network device in the embodiments of the present disclosure, and the computer program instructions cause a computer to perform the corresponding processes performed by the network device in various methods of the embodiments of the present disclosure. For brevity, details are not elaborated herein again.

In an embodiment, the computer program product may be applied to the mobile terminal/terminal device in the embodiments of the present disclosure, and the computer program instructions cause a computer to perform the corresponding processes performed by the mobile terminal/terminal device in various methods of the embodiments of the present disclosure. For brevity, details are not described herein again.

An embodiment of the present disclosure further provides a computer program.

In an embodiment, the computer program may be applied to the network device in the embodiments of the present disclosure, and the computer program, when is run on a computer, causes the computer to perform the corresponding processes performed by the network device in various methods of the embodiments of the present disclosure. For brevity, details are not elaborated herein again.

In an embodiment, the computer program may be applied to the mobile terminal/terminal device in the embodiments of the present disclosure, and the computer program, when is run on a computer, causes the computer to perform the corresponding processes performed by the mobile terminal/terminal device in various methods of the embodiments of the present disclosure. For brevity, details are not described herein again.

Those of ordinary skill in the art may realize that units and algorithm steps of various examples described in combination with the embodiments disclosed herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the aforementioned systems, apparatuses and units, reference may be made to the corresponding processes in the aforementioned method embodiments, and such specific working processes of the systems, devices and units are not described herein again for the purpose of convenient and brief description,.

In some embodiments provided in the present disclosure, it should be understood that the disclosed systems, apparatuses and methods may be implemented in other manners. For example, the aforementioned apparatus embodiments are merely exemplary. For example, the division of the units is merely a kind of logical function division, and other division manners may be adopted during practical implementation. For example, multiple units or components may be combined or integrated into another system, or some features may be neglected or not performed. In addition, mutual coupling or direct coupling or communication connection between various displayed or discussed components may be indirect coupling or communication connection, implemented through some interfaces, of the apparatuses or units, and may be implemented in electrical, mechanical or other forms.

The units described as separate components may be or may not be physically separate, and the components displayed as units may be or may not be physical units, that is, may be located in one place, or may be distributed on multiple network units. Some or all of the units may be selected to achieve the objectives of the solutions of the embodiments according to practical requirements.

In addition, various functional units in various embodiments of the present disclosure may be integrated into one processing unit, or each of the functional units may exist physically and separately, or two or more functional units may be integrated into one unit.

When the above functions are implemented in the form of a software functional module and sold or used as an independent product, the functions may be stored in a computer-readable storage medium. Based on such understanding, the essential part of the technical solutions of the present disclosure or a part of the technical solutions that contributes to the related art or a part of the technical solutions can be embodied in a form of a software product. The computer software product is stored in a storage medium, and includes several instructions to enable a computer device (which may be a personal computer, a server, or a network device, etc.) to perform all or a part of the operations of the methods described in the embodiments of the present disclosure. The foregoing storage medium includes various media that can store program codes, such as a USB flash disk, a mobile hard disk, an ROM, an RAM, a magnetic disk, or an optical disk, etc.

The foregoing are merely specific implementations of the present disclosure, but the scope of protection of the present disclosure is not limited thereto. Variations or replacements which can be readily thought by those skilled in the art within the technical scope disclosed in the present disclosure shall fall within the scope of protection of the present disclosure. Therefore, the scope of protection of the present disclosure shall be subject to the scope of protection of the claims.

## Claims

1. A processing method, comprising:
receiving, by a terminal device, a first signal, wherein the first signal is used for determining whether to exit an energy-saving reception and/or transmission state.

2. The method of claim 1, further comprising:
detecting, by the terminal device, the first signal on each transmission resource of at least some of transmission resources in a transmission resource set.

3. The method of claim 2, wherein the terminal device expects that transmit powers of the first signal transmitted on different transmission resources are different.

4. The method of claim 2 or 3, wherein each transmission resource comprises a time-domain unit and/or a frequency-domain unit.

5. The method of any one of claims 2 to 4, wherein
the terminal device expects that the transmit powers of the first signal transmitted on different time-domain units are different, and/or that the transmit powers of the first signal transmitted on the different frequency-domain units are different.

6. The method of claim 5, wherein
a temporal order of a plurality of time-domain units is positively correlated or negatively correlated with an order of the transmit powers of the first signal transmitted on the plurality of time-domain units.

7. The method of claim 5, wherein
an order of frequencies of a plurality of frequency-domain units is positively correlated or negatively correlated with an order of the transmit powers of the first signal transmitted on the plurality of frequency-domain units.

8. The method of any one of claims 2 to 7, wherein
the transmission resource set comprises a plurality of transmission resources within each of one or more first time periods.

9. The method of any one of claims 1 to 8, wherein the first signal is a power-supply signal with no information being transmitted, or the first signal is a signal carrying identification information, and the identification information comprises one or more of:
identification information of a cell that is accessed;
identification information of the terminal device; or
identification information of a group to which the terminal device belongs.

10. The method of any one of claims 1 to 9, wherein the first signal is the power-supply signal with no information being transmitted, and the method further comprises:
exiting, by the terminal device, the energy-saving reception and/or transmission state.

11. The method of any one of claims 1 to 9, wherein the first signal carries the identification information, and the method further comprises:
if the identification information carried in the first signal matches with identification information configured by the terminal device, exiting, by the terminal device, the energy-saving reception and/or transmission state.

12. The method of any one of claims 1 to 9, wherein the first signal carries the identification information, and the method further comprises:
in a case where a received power of the first signal is greater than or equal to a first threshold, if the identification information carried in the first signal matches with the identification information configured by the terminal device, exiting, by the terminal device, the energy-saving reception and/or transmission state.

13. The method of any one of claims 10 to 12, wherein after the terminal device exits the energy-saving reception and/or transmission state, the method further comprises:
stopping, by the terminal device, detecting the first signal on other undetected transmission resources among the at least some of the transmission resources in the transmission resource set.

14. The method of any of claims 10 to 13, wherein
a time-frequency resource for data transceiving after the terminal device exits the energy-saving reception and/or transmission state is determined based on a first transmission resource and/or the identification information configured by the terminal device, the first transmission resource being a transmission resource on which the terminal device receives the first signal.

15. The method of any one of claims 10 to 14, further comprising:
after the terminal device completes the data transceiving in a non-energy-saving reception and/or transmission state, entering, by the terminal device, the energy-saving reception and/or transmission state.

16. The method of any one of claims 1 to 15, further comprising:
in a case where the first signal is not detected, or in a case where the identification information carried in the first signal does not match with the identification information configured by the terminal device, continuing, by the terminal device, to detect the first signal on the other undetected transmission resources among the at least some of the transmission resources in the transmission resource set.

17. The method of any one of claims 1 to 16, wherein
the first signal is a signal received by the terminal device based on at least one of: envelope detection, amplitude detection, frequency detection, or phase detection.

18. A processing method, comprising:
sending, by a network device, a first signal on each transmission resource of at least some of transmission resources in a transmission resource set, wherein the first signal is used for a terminal device to determine whether to exit an energy-saving reception and/or transmission state.

19. The method of claim 18, wherein transmit powers of the first signal sent on different transmission resources are different.

20. The method of claim 18 or 19, wherein the transmission resource comprises a time-domain unit and/or a frequency-domain unit.

21. The method of claim 20, wherein
the transmit powers of the first signal sent on different time-domain units are different, and/or the transmit powers of the first signal sent on the different frequency-domain units are different.

22. The method of claim 21, wherein
a temporal order of a plurality of time-domain units is positively correlated or negatively correlated with an order of the transmit powers of the first signal transmitted on the plurality of time-domain units.

23. The method of claim 21, wherein
an order of frequencies of a plurality of frequency-domain units is positively correlated or negatively correlated with an order of the transmit powers of the first signal transmitted on the plurality of frequency-domain units.

24. The method of any one of claims 18 to 23, wherein
the transmission resource set comprises a plurality of transmission resources within each of one or more first time periods.

25. The method of any one of claims 18 to 24, wherein the first signal is a power-supply signal with no information being transmitted, or the first signal is a signal carrying identification information, and the identification information comprises one or more of:
identification information of a cell that is accessed;
identification information of the terminal device; or
identification information of a group to which the terminal device belongs.

26. The method of any one of claims 18 to 25, the first signal is a signal received by the terminal device based on at least one of: envelope detection, amplitude detection, frequency detection, or phase detection.

27. A processing device, applied to a terminal device, comprising:
a receiving unit, configured to receive a first signal, wherein the first signal is used for determining whether to exit an energy-saving reception and/or transmission state.

28. A processing device, applied to a network device, comprising:
a sending unit, configured to send a first signal on each transmission resource of a plurality of transmission resources, wherein the first signal is used for a terminal device to determine whether to exit an energy-saving reception and/or transmission state.

29. A terminal device comprising: a processor and a memory, wherein the memory is configured to store a computer program and the processor is configured to call and run the computer program stored in the memory, to perform the method of any one of claims 1 to 17.

30. A network device comprising: a processor and a memory, wherein the memory is configured to store a computer program and the processor is configured to call and run the computer program stored in the memory, to perform the method of any one of claims 18 to 26.

31. A chip comprising: a processor configured to call and run a computer program from a memory, to enable a device on which the chip is mounted to perform the method of any one of claims 1 to 17, or to enable a device on which the chip is mounted to perform the method of any one of claims 18 to 26.

32. A computer storage medium configured to store a computer program that causes a terminal device to perform the method of any one of claims 1 to 17, or causes a network device to perform the method of any one of claims 18 to 26.

33. A computer program product, comprising computer program instructions, wherein the computer program instructions cause a terminal device to perform the method of any one of claims 1 to 17, or cause a network device to perform the method of any one of claims 18 to 26.

34. A computer program, wherein the computer program causes a terminal device to perform the method of any one of claims 1 to 17, or causes a network device to perform the method of any one of claims 18 to 26.
